# EUROPÄISCHE PATENTSCHRIFT

(11) **EP 1 278 802 B1**
(45) Veröffentlichungstag und Bekanntmachung des Hinweises auf die Patenterteilung: **27.10.2004**
(21) Anmeldenummer: 01943000.8
(22) Anmeldetag: 03.05.2001
(51) Int. Cl.: C08L 97/02, B27N 1/02

(54) **FORMMASSEN AUS HOLZPARTIKELN UND DUROPLAST-PREPOLYMEREN**
MOLDING COMPOUNDS ON THE BASIS OF WOOD PARTICLES AND DUROPLASTIC PREPOLYMERS
MATIERES MOULABLES CONSTITUEES DE PARTICULES DE BOIS ET DE PREPOLYMERES DUROPLASTIQUES

(30) Priorität: 05.05.2000 DE 10022008
(43) Veröffentlichungstag der Anmeldung: 29.01.2003
(73) Patentinhaber: AMI Agrolinz Melamine International GmbH, 4020 Linz (AT)
(72) Erfinder: RÄTZSCH, Manfred, A-4062 Wilhering (AT); BUCKA, Hartmut, Eggendorf (AT)
(74) Vertreter: Gross, Felix, Dr.
(86) Internationale Anmeldenummer: PCT/DE2001/001659
(87) Internationale Veröffentlichungsnummer: WO 2001/085847

(56) Entgegenhaltungen:
- EP-A- 0 410 782

## Beschreibung

Die Erfindung betrifft Formmassen aus Holzpartikeln und geringen Anteilen an Duroplast-Prepolymeren.

Formmassen aus Holzpartikeln und hohen Anteilen an Duroplast-Prepolymeren wie Holzmehl-gefüllte Phenolharzformmassen oder Holzmehl-gefüllte Melaminharzformmassen sind bekannt. Erfüllt das unbehandelte Holzmehl lediglich Füllstofffunktion, so müssen bei der Formmassenherstellung über 40 Masse% Duroplast-Prepolymere eingesetzt werden, um eine thermoplastische Verarbeitbarkeit sicherzustellen. Der hohe Duroplastanteil ist kostenintensiv und führt zu Formmassen hoher Dichte [D. Brooks, Brit. Plastics 30 (1957), 480].

Bekannt ist weiterhin, Holz durch Umsetzung mit Essigsäureanhydrid, oder Benzylierung und nachfolgende Umsetzung mit Resorcin (Shiraishi, N., in: Wood and Cellulosic Chemistry, Marcel Dekker New York 1991, S. 861-881) oder durch Behandlung mit Ammoniak [Bariska, M., ACS Symp. Ser. 43 (1977), 326-347] zu plastifizieren. Diese Verfahren führen zwar zu thermisch verformbaren Holzformstoffen, durch Spritzguss oder Extrusion verarbeitbare Formmassen wurden jedoch nicht erzielt.

Die Aufgabe der vorliegenden Erfindung bestand darin, durch Spritzguss oder Extrusion verarbeitbare Formmassen auf Basis von modifizierten Holzpartikeln, auch aus Holzabfällen der Forstwirtschaft, mit möglichst geringem Anteil an Duroplast-Prepolymeren und ein technologisch einfaches Verfahren zu deren Herstellung zu entwickeln.

Die erfindungsgemässe Aufgabe wurde durch Formmassen aus
a) 65 bis 95 Masse% modifizierten Holzpartikeln,
b) 5 bis 34,5 Masse% Prepolymeren von Melaminharzen und/oder Hamstoffharzen mit Molmassen-Zahlenmitteln von 200 bis 5000,
c) 0,5 bis 10 Masse% wasserlöslichen, in Wasser dispergierbaren und/oder in Wasser emulgierbaren Polymeren,
d) gegebenenfalls 0,5 bis 15 Masse% Füll- und/oder Verstärkungsstoffen und 0,1 bis 1 Masse% Verarbeitungshilfsmitteln,
die durch eine mehrstufige reaktive Compoundierung hergestellt worden sind, wobei
- in der ersten Verfahrensstufe Holzpartikel mit wasserlöslichen, in Wasser dispergierbaren und/oder in Wasser emulgierbaren Polymeren, und gegebenenfalls Prepolymeren von Melaminharzen und/oder Harnstoffharzen, durch Imprägnierung und nachfolgende Trocknung auf einen Restwassergehalt von 0,5 bis 5 Masse% modifiziert wurden,
- in der zweiten Verfahrensstufe die in der ersten Verfahrensstufe modifizierten Holzpartikel, gegebenenfalls unter Zusatz von 1 bis 30 Masse%, bezogen auf die modifizierten Holzpartikel, Alkenylacetaten der Formel R-C(=CH₂)-O-CO-CH₃, wobei R=H oder R=C₁-C₄-Alkyl bedeuten, und/oder Phosphorylierungsmittel vom Typ C₁-C₄-Dialkylphosphite, Phosphorsäuredi-C₁-C₄-alkyl-esterchloride, Di-C₁-C₄-alkylphosphate und/oder Mono-C₁-C₄-alkylphosphate, in einem Durchlaufmischer einer Behandlung mit Ammoniakgas bis zu einer Ammoniakaufnahme von 5 bis 20 Masse%, bezogen auf die modifizierten Holzpartikel, gegebenenfalls nachfolgend einer Imprägnierung mit Prepolymeren von Melaminharzen und/oder Harnstoffharzen, unter Abtrennung eines Wasser und Ammoniak enthaltenden Gemischs durch Entgasung unterzogen wurden,
- in der dritten Verfahrensstufe die in der zweiten Verfahrensstufe modifizierten Holzpartikel, gegebenenfalls unter Zusatz von Füll- und Verstärkerstoffen sowie Verarbeitungshilfsmitteln, in einem kontinuierlichen Kneter mit den Prepolymeren von Melaminharzen und/oder Harnstoffharzen homogenisiert, umgesetzt, vacuumentgast, und das Reaktionsprodukt ausgetragen und granuliert wurde,
wobei Prepolymere von Melaminharzen und/oder Hamstoffharzen in der ersten Verfahrensstufe nach Zusatz der wasserlöslichen, in Wasser dispergierbaren und/oder in Wasser emulgierbaren Polymeren und/oder in der zweiten Verfahrensstufe vor der Entgasung und/oder in der dritten Verfahrensstufe zugesetzt worden sind,
gelöst.

Die Holzpartikel bestehen bevorzugt aus Nadel- oder Laubholzabfällen, auch aus forstwirtschaftlichen Abfällen, die als Partikel mit einem mittleren Durchmesser von 0,2 bis 8 mm oder als Schnitzel oder Fasern einer Maximallänge bis 12 mm vorliegen. Zur Erzielung dieser Partikeldimensionen ist eine weitere Zerkleinerung der Abfälle in Hobelmühlen und ein Aussieben erforderlich.

Die Prepolymere von Melaminharzen und/oder Harnstoffharzen sind bevorzugt Prepolymere von Melamin-Formaldehyd-Harzen, Melamin-Phenol-Formaldehyd-Harzen, Harnstoff-Formaldehyd-Harzen und/oder Melamin-Harnstoff-Formaldehyd-Harzen.

Die Prepolymere von Melamin-Formaldehyd-Harzen, Melamin-Phenol-Formaldehyd-Harzen und/oder Melamin-Hamstoff-Formaldehyd-Harzen können als Melaminkomponente ebenfalls 0,1 bis 80 Masse% Melaminderivate und/oder Triazinderivate wie 2-(2-Hydroxyethyl-amino)-4,6-diamino-1,3,5-triazin, 2-(5-Hydroxy-3-oxa-pentylamino)-4,6-diamino-1,3,5-triazin, 2,4,6-Tris-(6-aminohexylamino)-1,3,5-triazin, 2,4-(Di-5-hydroxy-3-oxapentytamin)-6-methyl-1,3,5-triazin, Ammelin und/oder hydrophobierte Melamin-Formaldehyd-Alkoholate von C₁-C₈-Alkoholen enthalten.

Als Prepolymere von Harnstoffharzen können neben Hamstoff-Formaldehyd-Harzen ebenfalls Mischkondensate mit Phenolen, Säureamiden oder Sulfonsäureamiden eingesetzt werden.

In den Prepolymeren können gegebenenfalls 0,5 bis 50 mol% der Methylolgruppen im Prepolymer durch Umsetzung mit C₁- bis C₄-aliphatischen Alkoholen wie Methanol, Ethanol oder iso-Butanol, Polyalkylenoxiden wie Polyethylenoxid oder Polypropylenoxid mit Molmassen von 500 bis 2500 und/oder C₅-C₁₂-(Meth)acrylsäurehydroxyalkylestern wie Hydroxybutylacrylat oder Hydroxyethylmethacrylat veräthert, durch Umsetzung mit ungesättigten Säuren vom Typ Acrylsäure, Maleinsäureanhydrid und/oder C₁₂-C₁₈-Carbonsäuren wie Laurinsäure, Stearinsäure oder Ölsäure verestert und/oder durch Umsetzung mit ungesättigten Säureamiden vom Typ Acrylamid oder Methacrylamid modifiziert sein.

In den Formmassen aus Holzpartikeln und Duroplast-Prepolymeren werden ebenfalls Prepolymere von Melaminharzen und/oder Harnstoffharzen bevorzugt, die 5 bis 50 Masse%, bezogen auf die Duroplast-Prepolymere, gekoppelte Blöcke an Polyacrylaten, nichtmodifizierten und/oder modifizierten Maleinsäureanhydridcopolymeren, Polyestem und/oder Alkydharzen enthalten. Die Ankopplung der Blöcke an Polyacrylaten, nichtmodifizierten und/oder modifizierten Maleinsäureanhydridcopolymeren, Polyestern und/oder Alkydharzen an die Prepolymere von Melaminharzen und/oder Harnstoffharzen kann durch polymeranaloge Umsetzung der in den Polyacrylaten, nichtmodifizierten und/oder modifizierten Maleinsäureanhydridcopolymeren, Polyestern und/oder Alkydharzen enthaltenen funktionellen Gruppen mit den funktionellen Gruppen der Duroplast-Prepolymeren, durch radikalische Polymerisation der den Polyacrylaten oder Maleinsäureanhydrid-Copolymeren zugrundeliegende Monomeren in Gegenwart der Duroplast-Prepolymere oder durch Herstellung der Duroplast-Prepolymeren in Gegenwart der Polyacrylate, nichtmodifizierten und/oder modifizierten Maleinsäureanhydridcopolymeren, Polyester und/oder Alkydharze erfolgen.

Beispiele für geeignete Polyacrylate, die als Blöcke in die Duroplast-Prepolymere eingebaut sind, sind Methylmethacrylat/Ethylacrylat/2-Hydroxyethylmethacrylat/Methacrylsäure-Copolymere, Styren/Methylmethacrylat/Hydroxyethylmethacrylat/2-Ethylhexylacrylat-Copolymere oder Butylacrylat/Butylmethacrylat/Ethylhexylmethacrylat/Hydroxyethylmethacrylat/MethacrylsäurelMethylmethacrylat/Styren-Copolymere.

Beispiele für geeignete Maleinsäureanhydrid-Copolymere, die als Blöcke in die Duroplast-Prepolymere eingebaut sind, sind Maleinsäureanhydrid-Styren-Copolymere, die gegebenenfalls mit Polyalkylenoxiden oder langkettigen Aminen modifiziert sind.

Beispiele für geeignete Polyester, die als Blöcke in die Duroplast-Prepolymere eingebaut sind, sind Polyester auf Basis Adipinsäure, Isophthalsäure, Trimethylolpropan und Neopentylglycol, die mit Tetrachlorphthalsäure umgesetzt worden sind, oder Polyester auf Basis von Phthalsäureanhydrid, Bemsteinsäureanhydrid, 1,3-Butandiol und Ethylenglycol.

Beispiele für geeignete Alkydharze, die als Blöcke in die Duroplast-Prepolymere eingebaut sind, sind Alkydharze aus Isophthalsäure, Phthalsäure, Neopentylglycol, Trimethylolethan und Kokosnussöl oder Alkydharze auf Basis von linearen und verzweigten Fettsäureglycidestern, Kokosnussölfettsäuren, Trimethyiolpropan, Ethylenglycol, Phthalsäureanhydrid und Adipinsäureanhydrid.

Als wasserlösliche Polymere, die in den Formmassen aus Holzpartikeln und Duroplast-Prepolymeren enthaltenen sind, sind bevorzugt Polyvinylalkohol, Polyacrylamid, Polyvinylpyrrolidon, Polyethylenoxid, Methylcellulose, Ethylcellulose, Hydroxyethylcellulose und/oder Carboxymethylcellulose geeignet.

Die in den Formmassen aus Holzpartikeln und Duroplast-Prepolymeren enthaltenen Wasser dispergierbaren bzw. in Wasser emulgierbaren Polymere sind Thermoplaste. Elastomere und/oder Wachse.

Als Thermoplaste werden Celluloseester, Celluloseether, Polyvinylacetat, Polyvinylpropionat, Polyacrylate, modifizierte Maleinsäureanhydrid-Copolymere, Polypropylenoxid und/oder Ethylen-Vinylacetat-Copolymere bevorzugt. Beispiele für modifizierte Maleinsäureanhydrid-Copolymere sind Copolymere, bei denen die Anhydridgruppe durch Amidierung und/oder Imidierung mit hydrophoben Kohlenwasserstoffsubstituenten oder durch Veresterung mit hydrophilen Polyethylenoxidsubstituenten modifiziert sind.

Bevorzugte in Wasser dispergierbare bzw. in Wasser emulgierbare Elaste sind Styren-Butadien-Kautschuke, Acrylatkautschuke, Polyurethane und/oder Fluorelastomere.

Bevorzugte Wachse sind Polyolefinoxidatwachse wie Polyethylenwachsoxidate oder Wachse auf Basis von Ethylen-Vinylacetat-Copolymeren.

Für Emulsionen zur Imprägnierung der Holzpartikel werden bevorzugt Polymere eingesetzt, die Formaldehyd-reaktive Gruppen wie Hydroxygruppen oder Aminogruppen besitzen.

Die wasserlöslichen, in Wasser dispergierbaren und/oder in Wasser emulgierbaren Polymere können während des Imprägnierungsvorgangs in der ersten Verfahrensstufe ebenfalls in situ gebildet werden, indem in der ersten Verfahrensstufe anstelle von Polymeren Mischungen aus ethylenisch ungesättigten Monomeren und thermisch zerfallenden Radikalbildnern zugesetzt werden, aus denen die wasserlöslichen, in Wasser dispergierbaren und/oder in Wasser emulgierbaren Polymere gebildet werden. Beispiele für geeignete ethylenisch ungesättigte Monomere sind Acrylamid, Vinylpyrrolidon, C₄-C₁₈-(Meth)acrylsäureester und/oder Vinylacetat.

Beispiele für die in den erfindungsgemässen Formmassen gegebenenfalls enthaltenen Füllstoffe sind Al₂O₃, Al(OH)₃, Bariumsulfat, Calciumcarbonat, Glaskugeln, Kieselerde, Mikrohohlkugeln, Ruß, Talkum, Schichtsilikate wie Bentonite und/oder Wollastonit.

Beispiele für die in den erfindungsgemässen Formmassen gegebenenfalls enthaltenen Verstärkerstoffe sind Cellulosefasem, Flachs, Jute, Kenaf und/oder Glasfasern.

Beispiele für die in den erfindungsgemässen Formmassen gegebenenfalls enthaltenen Verarbeitungshilfsmittel sind Calciumstearat, Magnesiumstearat und/oder Wachse.

Die Formmassen aus Holzpartikeln und Duroplast-Prepolymeren werden erfindungsgemäss nach einem Verfahren hergestellt, bei dem die Formmassen aus
a) 65 bis 95 Masse% modifizierten Holzpartikeln,
b) 5 bis 34,5 Masse% Prepolymeren von Melaminharzen und/oder Harnstoffharzen mit Molmassen-Zahlenmitteln von 200 bis 5000,
c) 0,5 bis 10 Masse% wasserlöslichen, in Wasser dispergierbaren und/oder in Wasser emulgierbaren Polymeren,
d) gegebenenfalls 0,5 bis 15 Masse% Füll- und/oder Verstärkungsstoffen und 0,1 bis 1 Masse% Verarbeitungshilfsmitteln,
durch eine mehrstufige reaktive Compoundierung hergestellt werden, wobei
- in der ersten Verfahrensstufe Holzpartikel über eine Zellenradschleuse in einen kontinuierlichen Durchlauftrockner dosiert werden, in dem bei 80 bis 180°C und einer Verweilzeit von 2 bis 35 min die Holzpartikel durch Besprühen mit einer Lösung, Dispersion, oder Emulsion mit 0,5 bis 10 Masse% wasserlöslichen, in Wasser dispergierbaren und/oder in Wasser emulgierbaren Polymeren, und gegebenenfalls Prepolymeren von Melaminharzen und/oder Harnstoffharzen, durch Imprägnierung und Trocknung auf einen Restwassergehalt von 0,5 bis 5 Masse% unter Inertgasatmosphäre modifiziert werden,
- in der zweiten Verfahrensstufe die in der ersten Verfahrensstufe modifizierten Holzpartikel über eine Zellenradschleuse, gegebenenfalls unter Zusatz von 1 bis 30 Masse%, bezogen auf die modifizierten Holzpartikel, Alkenylacetaten der Formel R-C(=CH₂)-O-CO-CH₃, wobei R=H oder R=C₁-C₄-Alkyl bedeuten, und/oder Phosphorylierungsmittel vom Typ C₁-C₄-Dialkylphosphite, Phosphorsäuredi-C₁-C₄-alkyl-esterchloride, Di-C₁-C₄-alkylphosphate und/oder Mono-C₁-C₄-alkylphosphate, in einem beheizbaren Durchlaufmischer mit Dosierstutzen für Ammoniakgas, Dosierstutzen für Prepolymere von Melaminharzen und/oder Hamstoffharzen und Stutzen für Vacuumentgasung, bei 15 bis 140°C und nach einer Verweilzeit von 0,5 bis 10 min einer Behandlung mit Ammoniakgas bei einem Druck von 0,3 bis 1,5 MPa bis zu einer Ammoniakaufnahme von 5 bis 20 Masse%, bezogen auf die modifizierten Holzpartikel, unter Abtrennung eines Wasser und Ammoniak enthaltenden Gemischs durch Entgasung unterzogen werden, wobei die Gesamtverweilzeit in der zweiten Verfahrensstufe 3 bis 20 min beträgt,
- in der dritten Verfahrensstufe die in der zweiten Verfahrensstufe modifizierten Holzpartikel, gegebenenfalls unter Zusatz von Füll- und Verstärkerstoffen sowie Verarbeitungshilfsmitteln, über eine Zellenradschleuse in einen kontinuierlichen Kneter mit Dosiereinrichtung für Duroplast-Prepolymere dosiert und bei einer Verweilzeit von 3 bis 12 min mit den Prepolymeren von Melaminharzen und/oder Hamstoffharzen homogenisiert werden, die Reaktionsmischung bei Temperaturen im Bereich von 120 bis 200°C umgesetzt, und das Reaktionsprodukt vacuumentgast, ausgetragen und granuliert wird,
wobei Prepolymere von Melaminharzen und/oder Hamstoffharzen in der ersten Verfahrensstufe nach Zusatz der wasserlöslichen, in Wasser dispergierbaren und/oder in Wasser emulgierbaren Polymeren und/oder in der zweiten Verfahrensstufe vor der Entgasung und/oder in der dritten Verfahrensstufe zugesetzt werden.

Bevorzugt erfolgt der Zusatz von Prepolymeren von Melaminharzen und/oder Hamstoffharzen ausschliesslich in der dritten Verfahrensstufe.

Der Feststoffgehalt der Lösungen, Dispersionen oder Emulsionen von wasserlöslichen, in Wasser dispergierbaren und/oder in Wasser emulgierbaren Polymeren, die in der ersten Verfahrensstufe eingesetzt werden, liegt bevorzugt im Bereich von 20 bis 60 Masse%. Die Verweilzeit im kontinuierlichen Durchlauftrockner wird durch den Feststoffgehalt der Lösungen, Dispersionen oder Emulsionen, die auf die Holzpartikel aufzubringende Konzentration der wasserlöslichen, in Wasser dispergierbaren und/oder in Wasser emulgierbaren Polymeren und die Manteltemperatur des kontinuierlichen Durchlauftrockners bestimmt. Hohe Verweilzeiten im Durchlauftrockner sind erforderlich, wenn hohe Polymerkonzentrationen auf die Holzpartikel bei einem niedrigen Feststoffgehalt der Lösungen, Dispersionen oder Emulsionen und bei einer niedrigen Manteltemperatur des kontinuierlichen Durchlauftrockners aufgebracht werden. Zur Verhinderung einer oxidativen Schädigung der Holzpartikel während der Imprägnierung und Trocknung in der ersten Verfahrensstufe wird der kontinuierliche Durchlauf trockner mit Inertgasen wie Stickstoff oder Argon gespült.

Beispiele für die in der zweiten Verfahrensstufe gegebenenfalls eingesetzten Alkenylacetate der Formel R-C(=CH₂)-O-CO-CH₃ sind Vinylacetat und Isopropenylacetat.

Beispiele für die in der zweiten Verfahrensstufe gegebenenfalls eingesetzten Phosphorylierungsmittel vom Typ C₁-C₄-Dialkylphosphite, Phosphorsäuredi-C₁-C₄-alkyl-esterchloride, Di-C₁-C₄-alkylphosphate und/oder Mono-C₁-C₄-alkylphosphate sind Dimethylphosphit, Diethylphosphit, Phosphorsäurediethylesterchlorid, Thiophosphorsäurediethylesterchlorid und Di-2-(ethylhexyl)hydrogenphosphat.

Die Behandlung der mit emulgierbaren Thermoplasten beladenen Holzpartikel mit Ammoniakgas in der zweiten Verfahrensstufe erfolgt bevorzugt bei 0,3 bis 1,5 MPa beim Ausgangsdruck des Ammoniakdruckbehälters. Es ist von Vorteil, den Ammoniak aus dem Ammoniak-Wasser-Gemisch der Vakuumentgasung sorptiv rückzugewinnen. Die erforderliche Verweilzeit bzw. Ammoniakaufnahme wird durch das Massenverhältnis Holzpartikel/Duroplast-Prepolymere bestimmt. Niedrige Anteile an Duroplast-Prepolymeren erfordern eine hohe Ammoniak-Aufnahme und umgekehrt.

Die in der dritten Verfahrensstufe eingesetzten kontinuierlichen Kneter sind bevorzugt Doppelschneckenextruder mit L/D 32 bis 48 oder Einschneckenextruder mit Plungerschnecke.

Die Dosierung des Duroplast-Prepolymers in der ersten Verfahrensstufe nach Zusatz der wasserlöslichen, in Wasser dispergierbaren und/oder in Wasser emulgierbaren Polymeren und/oder in der zweiten Verfahrensstufe vor der Entgasung und/oder in der dritten Verfahrensstufe erfolgt bevorzugt aus einem Vorratsbehälter, dem eine Duroplastprepolymersynthesestation vorgelagert ist.

Die eingesetzten Melaminharz-Prepolymere werden durch Polykondensation von Melamin mit Formaldehyd und/oder Mischungen aus 20 bis 99,9 Masse% Melamin und 0,1 bis 80 Masse% Melaminderivaten und/oder Triazinderivaten, gegebenenfalls unter Zusatz von 0,1 bis 10 Masse%, bezogen auf die Summe von Melamin, Melaminderivaten und Triazinderivaten, an Phenolen, mit 30% bis 40% wässrigem Formaldehyd in Kondensationsrührkesseln bei 60 bis 100°C hergestellt, wobei das Molverhältnis Melamin/Formaldehyd bzw. Melamin + Melaminderivat bzw. Triazinderivat / Formaldehyd bevorzugt 1 : 2,5 bis 1 : 5,5 beträgt.

Für die Herstellung von Harnstoff-Formaldehyd-Prepolymeren liegt das bevorzugte Molverhältnis Harnstoff zu Formaldehyd bei 1 : 1,4 bis 1 : 1,6.

Die erfindungsgemässen Formmassen sind insbesondere zur Herstellung von Spritzgussteilen oder von durch Extrusion hergestellten Halbzeugen oder Formstoffen geeignet. Bevorzugte Massetemperaturen bei der Extrusionsverarbeitung liegen im Bereich von 145 bis 190°C und bei der Spritzgussverarbeitung im Bereich von 160 bis 210°C. Günstig sind Verarbeitungsmaschinen mit Vacuumentgasung.

Die aus den Formmassen hergestellten Halbzeuge und Formstoffe in Form von Platten, Profilen, Hohlprofilen und Rohren sind insbesondere für einen Einsatz in der Bauindustrie wie Abdeckungen oder Teile von Lüftungsanlagen und/oder in der Möbelindustrie geeignet.

Vor der Verarbeitung durch Extrusion oder Spritzguss können den Formmassen Härtungsbeschleuniger durch Auftrommeln zugesetzt werden. Geeignete Härtungsbeschleuniger sind p-Toluolsulfonsäure, Oxalsäure, Methylpyrophosphate, Phthalsäure und/oder Maleinsäure.

Die Formgebung zu Platten, Profilen, Hohlprofilen und Rohren kann ebenfalls direkt nachfolgend der dritten Verfahrensstufe erfolgen, indem die Formmasse aus dem kontinuierlichen Kneter durch ein Formwerkzeug extrudiert und als Halbzeug abgezogen wird.

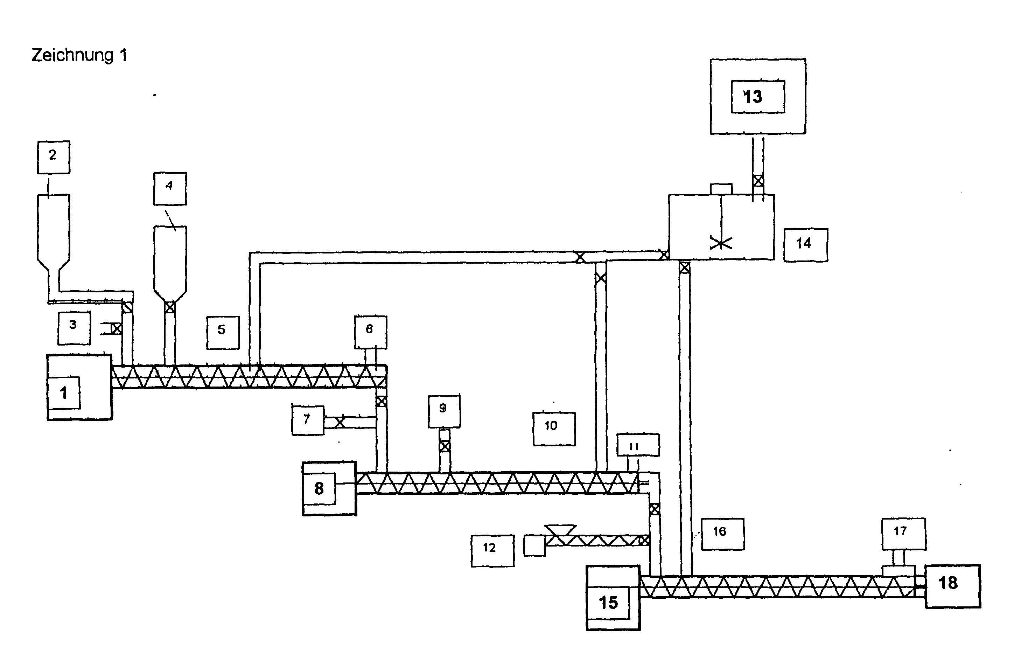

Beispielhaft wird das Verfahrensschema zur Herstellung von Formmassen aus Holzpartikeln und Duroplast-Prepolymeren durch mehrstufige reaktive Compoundierung in Zeichnung 1 dargestellt, dabei bedeuten:
1 kontinuierlicher Durchlauftrockner
2 Silo für Holzpartikel mit Dosierbandwaage und Zellenradschleuse
3 Dosierstutzen für Inertgas
4 Vorratsgefäss mit Dosierpumpe für wasserlösliche, in Wasser dispergierbare und/oder in Wasser emulgierbare Polymere
5 Dosierstutzen für Duroplast-Prepolymere
6 Entgasungsstutzen
7 Dosierstutzen für Alkenylacetate und/oder Phosphorylierungsmittel
8 Kontinuierlicher Durchlaufmischer
9 Dosierstutzen mit Druckregler für Ammoniakgas
10 Dosierstutzen für Duroplast-Prepolymere
11 Stutzen für Vacuumentgasung
12 Dosiereinrichtung für Füllstoffe, Verstärkerstoffe und Verarbeitungshilfsmittel
13 Duroplastprepolymersynthesestation
14 Vorratsbehälter für Duroplast-Prepolymere
15 Kontinuierlicher beheizbarer Kneter
16 Dosierstutzen für Duroplast-Prepolymere
17 Stutzen für Vacuumentgasung
18 Granulator

Die Erfindung wird durch nachfolgende Beispiele erläutert:

### Beispiel 1

In einer Versuchseinrichtung nach dem Verfahrensschema von Zeichnung 1 werden aus dem Silo (2) Kiefernholzpartikel aus forstwirtschaftlichen Abfällen, die mittels einer Hobelmühle mit Siebeinrichtung auf einen mittleren Partikeldurchmesser von 3,5 mm feinzerkleinert wurden, über eine Dosierbandwaage mit 3,2 kg/h durch eine Zellenradschleuse in den kontinuierlichen Durchlauftrockner (1) dosiert. Der Durchlauftrockner wird über den Stutzen (3) mit Stickstoff gespült, der in einem Dampf-beheizten Wärmetauscher auf 120°C vorgewärmt ist. Die Manteltemperatur am Eingang des Durchlauftrockner beträgt 150°C und am Ausgang des Durchlaufmischers 75°C. Aus dem Vorratsgefäss für wasserlösliche, in Wasser dispergierbare und/oder in Wasser emulgierbare Polymere (4) wird mit 0,140 kg/h eine Polyacrylat-Emulsion (Butylacrylat-Hydroxyethylacrylat-Acrylsäure-Copolymer 64:32:4; Feststoffgehalt 25 Masse%) in den Durchlauftrockner dosiert. Die Verweilzeit der Holzpartikel im Durchlauftrockner beträgt 17 min. Eine aus dem Entgasungsstutzen (6) gezogene Analysenprobe besitzt einen Polyacrylatgehalt von 1,1 Masse% und einen Restwassergehalt von 1,5 Masse%.

Die mit dem Polyacrylat imprägnierten getrockneten Kiefemholzpartikel werden über eine Zellenradschleuse in einen beheizbaren kontinuierlichen Durchlaufmischer (8) mit Dosierstutzen für gasförmige Medien und Entgasungsstutzen, Manteltemperatur 60/100/125°C, überführt. Über den Dosierstutzen mit Druckregler (9) wird Ammoniakgas mit 0,7 MPa in den kontinuierlichen Durchlaufmischer dosiert. Das desorbierte Wasser und das überschüssige Ammoniakgas wird über den Stutzen (11) durch Vakuumentgasung abgetrennt und Ammoniak sorptiv zurückgewonnen. Eine aus dem Vakuumentgasungsstutzen (11) gezogenen Analysenprobe ergab einen Ammoniakgehalt der modifizierten Kiefemholzpartikel von 12 Masse%.

Die ausgetragenen modifizierten Kiefemholzpartikel werden über eine Zellenradschleuse in einen nachgeschaltenen Wemer&Pfleiderer-Doppelschneckenextruder (15) ZSK 30, L/D= 42, mit Dosierstutzen für Duroplast-Prepolymere (16) und Vacuumentgasung (17), Temperaturprofil 120/135/155/170/170/180/170/190/180°C, überführt. Aus dem Vorratsgefäss für Duroplast-Prepolymere (14) wird ein Melamin-Phenol-Formaldehyd-Prepolymer (Mₙ=450) mit 0,5 kg/h dosiert. Das Melamin-Phenol-Formaldehyd-Prepolymer war in der Duroplastprepolymersynthesestation durch Kondensation von Melamin/Phenol/Formaldehyd (30%) im Molverhältnis 0,8 : 0,2 : 3,2 bei 80°C/2,5 Std. hergestellt worden. Das Reaktionsgemisch wird über den Entgasungsstutzen (17) vacuumentgast, ausgetragen und granuliert.

Durch Spritzguss hergestellte Prüfkörper besitzen folgende Eigenschaften :
Zugfestigkeit: 40 MPa Biegefestigkeit: 62 MPa Biege-E-Modul: 3400 MPa

### Beispiel 2

In einer Versuchseinrichtung nach dem Verfahrensschema von Zeichnung 1 werden aus dem Silo (2) Fichtenholzpartikel aus forstwirtschaftlichen Abfällen, die mittels einer Hobelmühle mit Siebeinrichtung auf einen mittleren Partikeldurchmesser von 4,2 mm feinzerkleinert wurden, über eine Dosierbandwaage mit 2,9 kg/h durch eine Zellenradschleuse in den kontinuierlichen Durchlauftrockner (1) dosiert. Der Durchlauftrockner wird über den Stutzen (3) mit Stickstoff gespült, der in einem Dampf-beheizten Wärmetauscher auf 110°C vorgewärmt ist. Die Manteltemperatur am Eingang des Durchlauftrockners beträgt 145°C und am Ausgang des Durchlauftrockners 80°C. Aus dem Vorratsgefäss für wasserlösliche, in Wasser dispergierbare und/oder in Wasser emulgierbare Polymere (4) wird mit 0,130 kg/h eine Polyvinylalkohol-Emulsion (Feststoffgehalt 45 Masse%) in den Durchlauftrockner dosiert. Die Verweilzeit der Holzpartikel im Durchlauftrockner beträgt 14 min. Eine aus dem Entgasungsstutzen (6) gezogene Analysenprobe besitzt einen Polyvinylalkohol-Gehalt von 2,0 Masse% und einen Restwassergehalt von 1,2 Masse%.

Die mit Polyvinylalkohol imprägnierten getrockneten Fichtenholzpartikel werden über eine Zellenradschleuse nach Eindosierung von Isopropenylacetat mit 0,85 kg/h in einen kontinuierlichen Durchlaufmischer (8) mit Dosierstutzen für gasförmige Medien (9) und Entgasungsstutzen, Manteltemperatur 80/110/130°C, überführt. Über den Dosierstutzen mit Druckregler (9) wird Ammoniakgas mit 0,7 MPa in den Extruder dosiert. Das desorbierte Wasser und die nicht umgesetzten Reaktanten und flüchtigen Reaktionsprodukte werden über den Stutzen (11) durch Vakuumentgasung abgetrennt und Ammoniak sorptiv zurückgewonnen. Eine aus dem Vakuumentgasungsstutzen (11) gezogenen Analysenprobe ergab einen Ammoniakgehalt der modifizierten Fichtenholzpartikel von 16 Masse%.

Die ausgetragenen modifizierten Fichtenholzpartikel werden über eine Zellenradschleuse in einen nachgeschaltenen Wemer&Pfleiderer-Doppelschneckenextruder (15) ZSK 30, L/D= 42, mit Dosierstutzen für flüssige Medien (16) und Vacuumentgasung (17), Temperaturprofil 120/135/155/170/175/180/180/190/180°C, überführt. Gleichzeitig werden in den Extruder 10 Masse%, bezogen auf die Holzpartikel, Glasfasern und 1 Masse%, bezogen auf die Holzpartikel, Calciumstearat über die Dosiereinrichtung (12) dosiert. Aus dem Vorratsgefäss für Duroplast-Prepolymere (14) wird ein Harnstoff-Melamin-Formaldehyd-Prepolymer (Mₙ=650) mit 1,3 kg/h dosiert. Das Hamstoff-Metamin-Formaidehyd -Prepolymer war in der Duroplastprepolymersynthesestation durch Kondensation von Harnstoff/Melamin/Formaldehyd (25%) im Molverhältnis 0,3 : 0,8 : 2,8 bei 85°C/2,5 Std. hergestellt worden. Das Reaktionsgemisch wird über den Entgasungsstutzen (17) vacuumentgast, ausgetragen und granuliert.

Auf die Formmassenpartikel wird im Taumelmischer 0,1 Masse% Phthalsäure aufgetrommelt und die Formmassenpartikel durch Spritzguss bei einer Massetemperatur von 200°C zu Prüfstäben verarbeitet. Die Prüfstäbe besitzen folgende Eigenschaften:
Zugfestigkeit: 65 MPa Biegefestigkeit: 80 MPa Biege-E-Modul: 7200 MPa

## Patentansprüche

1. Formmassen aus Holzpartikeln und Duroplast-Prepolymeren, **dadurch gekennzeichnet, dass** die Formmassen aus
a) 65 bis 95 Masse% modifizierten Holzpartikeln,
b) 5 bis 34,5 Masse% Prepolymeren von Melaminharzen und/oder Harnstoffharzen mit Molmassen-Zahlenmitteln von 200 bis 5000,
c) 0,5 bis 10 Masse% wasserlöslichen, in Wasser dispergierbaren und/oder in Wasser emulgierbaren Polymeren,
d) gegebenenfalls 0,5 bis 15 Masse% Füll- und/oder Verstärkungsstoffen und 0,1 bis 1 Masse% Verarbeitungshilfsmitteln,
durch eine mehrstufige reaktive Compoundierung hergestellt worden sind, wobei
- in der ersten Verfahrensstufe Holzpartikel mit wasserlöslichen, in Wasser dispergierbaren und/oder in Wasser emulgierbaren Polymeren, und gegebenenfalls Prepolymeren von Melaminharzen und/oder Harnstoffharzen, durch Imprägnierung und nachfolgende Trocknung auf einen Restwassergehalt von 0,5 bis 5 Masse% modifiziert wurden,
- in der zweiten Verfahrensstufe die in der ersten Verfahrensstufe modifizierten Holzpartikel, gegebenenfalls unter Zusatz von 1 bis 30 Masse%, bezogen auf die modifizierten Holzpartikel, Alkenylacetaten der Formel R-C(=CH₂)-O-CO-CH₃, wobei R=H oder R=C₁-C₄-Alkyl bedeuten, und/oder Phosphorylierungsmittel vom Typ C₁-C₄-Dialkylphosphite, Phosphorsäuredi-C₁-C₄-alkyl-esterchloride, Di-C₁-C₄-alkylphosphate und/oder Mono-C₁-C₄-alkylphosphate, in einem Durchlaufmischer einer Behandlung mit Ammoniakgas bis zu einer Ammoniakaufnahme von 5 bis 20 Masse%, bezogen auf die modifizierten Holzpartikel, gegebenenfalls nachfolgend einer Imprägnierung mit Prepolymeren von Melaminharzen und/oder Harnstoffharzen, unter Abtrennung eines Wasser und Ammoniak enthaltenden Gemischs durch Entgasung unterzogen wurden,
- in der dritten Verfahrensstufe die in der zweiten Verfahrensstufe modifizierten Holzpartikel, gegebenenfalls unter Zusatz von Füll- und Verstärkerstoffen sowie Verarbeitungshilfsmitteln, in einem kontinuierlichen Kneter mit den Prepolymeren von Melaminharzen und/oder Harnstoffharzen homogenisiert, umgesetzt, vacuumentgast, und das Reaktionsprodukt ausgetragen und granuliert wurde,
wobei Prepolymere von Melaminharzen und/oder Harnstoffharzen in der ersten Verfahrensstufe nach Zusatz der wasserlöslichen, in Wasser dispergierbaren und/oder in Wasser emulgierbaren Polymeren und/oder in der zweiten Verfahrensstufe vor der Entgasung und/oder in der dritten Verfahrensstufe zugesetzt worden sind.

2. Formmassen aus Holzpartikeln und Duroplast-Prepolymeren nach Anspruch 1, **dadurch gekennzeichnet, dass** die Holzpartikel aus Nadel- oder Laubholzabfällen bestehen, die als Partikel mit einem mittleren Durchmesservon 0,2 bis 8 mm oder als Schnitzel oder Fasern einer Maximallänge bis 12 mm vorliegen.

3. Formmassen aus Holzpartikeln und Duroplast-Prepolymeren nach Anspruch 1 und 2, **dadurch gekennzeichnet, dass** die Prepolymere von Melaminharzen und/oder Harnstoffharzen Prepolymere von Melamin-Formaldehyd-Harzen, Melamin-Phenol-Formaldehyd-Harzen, Harnstoff-Formaldehyd-Harzen und/oder Melamin-Harnstoff-Formaldehyd-Harzen sind, bei denen gegebenenfalls 0,5 bis 50 mol% der Methylolgruppen im Prepolymer durch Umsetzung mit C₁- bis C₄-aliphatischen Alkoholen, Polyalkylenoxiden mit Molmassen von 500 bis 2500 und/oder C₅-C₁₂-(Meth)acrylsäurehydroxyalkylestern veräthert durch Umsetzung mit ungesättigten Säuren vom Typ Acrylsäure, Maleinsäureanhydrid und/oder C₁₂-C₁₈-Carbonsäuren verestert und/oder durch Umsetzung mit ungesättigten Säureamiden vom Typ Acrylamid oder Methacrylamid modifiziert worden sind.

4. Formmassen aus Holzpartikeln und Duroplast-Prepolymeren nach Anspruch 1 bis 3, **dadurch gekennzeichnet, dass** die Prepolymere von Melaminharzen und/oder Harnstoffharzen Prepolymere sind, die 5 bis 50 Masse%, bezogen auf die Duroplast-Prepolymere, gekoppelte Blöcke an Polyacrylaten, nichtmodifizierten und/oder modifizierten Maleinsäureanhydridcopolymeren, Polyestern und/oder Alkydharzen enthalten.

5. Formmassen aus Holzpartikeln und Duroplast-Prepolymeren nach einem oder mehreren der Ansprüche 1 bis 4, **dadurch gekennzeichnet, dass** die wasserlöslichen Polymere Polyvinylalkohol, Polyacrylamid, Polyvinylpyrrolidon, Polyethylenoxid, Methylcellulose, Ethylcellulose, Hydroxyethylcellulose und/oder Carboxymethylcellulose sind.

6. Formmassen aus Hoizpartikeln und Duroplast-Prepolymeren nach einem oder mehreren der Ansprüche 1 bis 5, **dadurch gekennzeichnet, dass** die in Wasser dispergierbaren bzw. in Wasser emulgierbaren Polymere Thermoplaste, bevorzugt Celluloseester, Celluloseether, Polyvinylacetat, Polyvinylpropionat, Polyacrylate, modifizierte Maleinsäureanhydrid-Copolymere, Polypropylenoxid und/oder Ethylen-Vinylacetat-Copolymere, Elaste, bevorzugt Styren-Butadien-Kautschuke, Acrylatkautschuke, Polyurethane und/oder Fluorelastomere und/oder Wachse, bevorzugt Polyolefinoxidatwachse oder Wachse auf Basis von Ethylen-Vinylacetat-Copolymeren oder teilverseiften Ethylen-Vinylacetat-Copolymeren sind.

7. Verfahren zur Herstellung von Formmassen aus Holzpartikeln und Duroplast-Prepolymeren, **dadurch gekennzeichnet, dass** die Formmassen aus
a) 65 bis 95 Masse% modifizierten Holzpartikeln,
b) 5 bis 34,5 Masse% Prepolymeren von Melaminharzen und/oder Harnstoffharzen mit Molmassen-Zahlenmitteln von 200 bis 5000,
c) 0,5 bis 10 Masse% wasserlösliche, in Wasser dispergierbare und/oder in Wasser emulgierbare Polymere
d) gegebenenfatls 0,5 bis 15 Masse% Füll- und/oder Verstärkungsstoffen und 0,1 bis 1 Masse% Verarbeitungshilfsmitteln,
durch eine mehrstufige reaktive Compoundierung hergestellt werden; wobei
- in der ersten Verfahrensstufe Holzpartikel über eine Zellenradschleuse in einen kontinuierlichen Durchlauftrockner dosiert werden, in dem bei 80 bis 180°C und einer Verweilzeit von 2 bis 35 min die Holzpartikel durch Besprühen mit einer Lösung, Dispersion, oder Emulsion mit 0,5 bis 10 Masse% wasserlöslichen, in Wasser dispergierbaren und/oder in Wasser emulgierbaren Polymeren, und gegebenenfalls Prepolymeren von Melaminharzen und/oder Hamstoffharzen, durch Imprägnierung und Trocknung auf einen Restwassergehalt von 0,5 bis 5 Masse% unter Inertgasatmosphäre modifiziert werden,
- in der zweiten Verfahrensstufe die in der ersten Verfahrensstufe modifizierten Holzpartikel über eine Zellenradschleuse, gegebenenfalls unter Zusatz von 1 bis 30 Masse%, bezogen auf die modifizierten Holzpartikel, Alkenylacetaten der Formel R-C(=CH₂)-O-CO-CH₃, wobei R=H oder R=C₁-C₄-Alkyl bedeuten, und/oder Phosphorylierungsmittel vom Typ C₁-C₄-Dialkylphosphite, Phosphorsäuredi-C₁-C₄-alkyl-esterchloride, Di-C₁-C₄-alkylphosphate und/oder Mono-C₁-C₄-alkylphosphate, in einem beheizbaren Durchlaufmischer mit Dosierstutzen für Ammoniakgas, Dosierstutzen für Prepolymere von Melaminharzen und/oder Harnstoffharzen und Stutzen für Vacuumentgasung, bei 15 bis 140°C und nach einer Verweilzeit von 0,5 bis 10 min einer Behandlung mit Ammoniakgas bei einem Druck von 0,3 bis 1,5 MPa bis zu einer Ammoniakaufnahme von 5 bis 20 Masse%, bezogen auf die modifizierten Holzpartikel, unter Abtrennung eines Wasser und Ammoniak enthaltenden Gemischs durch Entgasung unterzogen werden, wobei die Gesamtverweilzeit in der zweiten Verfahrensstufe 3 bis 20 min beträgt,
- in der dritten Verfahrensstufe die in der zweiten Verfahrensstufe modifizierten Holzpartikel, gegebenenfalls unter Zusatz von Füll- und Verstärkerstoffen sowie Verarbeitungshilfsmitteln, über eine Zellenradschleuse in einen kontinuierlichen Kneter mit Dosiereinrichtung für Duroplast-Prepolymere dosiert und bei einer Verweilzeit von 3 bis 12 min mit den Prepolymeren von Melaminharzen und/oder Harnstoffharzen homogenisiert werden, die Reaktionsmischung bei Temperaturen im Bereich von 120 bis 200°C umgesetzt, und das Reaktionsprodukt vacuumentgast, ausgetragen und granuliert wird,
wobei Prepolymere von Melaminharzen und/oder Harnstoffharzen in der ersten Verfahrensstufe nach Zusatz der wasserlöslichen, in Wasser dispergierbaren und/oder in Wasser emulgierbaren Polymeren und/oder in der zweiten Verfahrensstufe vor der Entgasung und/oder in der dritten Verfahrensstufe zugesetzt werden.

8. Verfahren zur Herstellung von Formmassen aus Holzpartikeln und Duroplast-Prepolymeren nach Anspruch 7, **dadurch gekennzeichnet, dass** der Zusatz von Prepolymeren von Melaminharzen und/oder Harnstoffharzen ausschliesslich in der dritten Verfahrensstufe erfolgt.

9. Verfahren zur Herstellung von Formmassen aus Holzpartikeln und Duroplast-Prepolymeren nach Anspruch 7 und 8, **dadurch gekennzeichnet, dass** die Dosierung des Duroplast-Prepolymers in der ersten Verfahrensstufe nach Zusatz der wassertösüchen, in Wasser dispergierbaren und/oder in Wasser emulgierbaren Polymeren und/oder in der zweiten Verfahrensstufe vor der Entgasung und/oder in der dritten Verfahrensstufe bevorzugt aus einem Vorratsbehälter, dem eine Duroplastprepolymersynthesestation vorgelagert ist, erfolgt.

10. Verwendung von Formmassen nach einem oder mehreren der Ansprüche 1 bis 6 zur Herstellung von Spritzgussteilen oder von durch Extrusion hergestellten Halbzeugen oder Formstoffen, bevorzugt in Form von Platten, Profilen, Hohlprofilen und Rohren für einen Einsatz in der Bauindustrie und/oder Möbelindustrie.

## Claims

1. Moulding materials comprising wood particles and thermosetting prepolymers, **characterized in that** the moulding materials have been prepared from
a) 65 to 95% by mass of modified wood particles,
b) 5 to 34.5% by mass of prepolymers of melamine resins and/or urea resins having number average molar masses of 200 to 5000,
c) 0.5 to 10% by mass of polymers which are water-soluble, dispersible in water and/or emulsifiable in water,
d) optionally 0.5 to 15% by mass of fillers and/or reinforcing substances and 0.1 to 1% by mass of processing auxiliaries,
by a multistage reactive compounding, wherein
- in the first process stage, wood particles were modified with polymers which are water-soluble, dispersible in water and/or emulsifiable in water and optionally prepolymers of melamine resins and/or urea resins, by impregnation and subsequent drying to a residual water content of 0.5 to 5% by mass,
- in the second process stage the wood particles modified in the first process stage were subjected, optionally with addition of 1 to 30% by mass, based on the modified wood particles, of alkenyl acetates of the formula R·C(=CH₂)-O-CO-CH₃, wherein R denotes H or R denotes C₁-C₄-alkyl, and/or phosphorylating agents of the type C₁-C₄-dialkyl phosphites, phosphoric acid di-C₁-C₄-alkyl ester chlorides, di-C₁-C₄-alkyl phosphates and/or mono-C₁-C₄-alkyl phosphates, in a continuous mixer, to a treatment with ammonia gas up to an ammonia absorption of 5 to 20% by mass, based on the modified wood particles, optionally subsequently to an impregnation with prepolymers of melamine resins and/or urea resins, with removal of a mixture containing water and ammonia by devolatilization,
- in the third process stage, the wood particles modified in the second process stage were homogenized with the prepolymers of melamine resins and/or urea resins in a continuous kneader, optionally with addition of fillers and reinforcing substances and processing auxiliaries, reacted, and devolatilized in vacuo, and the reaction product was discharged and granulated,
prepolymers of melamine resins and/or urea resins having been added in the first process stage after addition of the polymers which are water-soluble, dispersible in water and/or emulsifiable in water and/or in the second process stage before the devolatilization and/or in the third process stage.

2. Moulding materials comprising wood particles and thermosetting prepolymers according to Claim 1, **characterized in that** the wood particles consist of hardwood or softwood wastes which are present as particles having a mean diameter of 0.2 to 8 mm or as chips or fibres having a maximum length of up to 12 mm.

3. Moulding materials comprising wood particles and thermosetting prepolymers according to Claim 1 or 2, **characterized in that** the prepolymers of melamine resins and/or urea resins are prepolymers of melamine/formaldehyde resins, melamine/phenol/formaldehyde resins, urea/formaldehyde resins and/or melamine/urea/formaldehyde resins, in which optionally 0.5 to 50 mol% of the methylol groups in the prepolymer have been etherified by reaction with aliphatic C₁-C₄-alcohols, polyalkylene oxides having molar masses of 500 to 2500 and/or C₅-C₁₂-hydroxyalkyl (meth)acrylates, esterified by reaction with unsaturated diacids of the type consisting of acrylic acid, maleic anhydride and/or C₁₂-C₁₈-carboxylic acids and/or modified by reaction with unsaturated acid amides of the acrylamide or methacrylamide type.

4. Moulding materials comprising wood particles and thermosetting prepolymers according to any of Claims 1 to 3, **characterized in that** the prepolymers of melamine resins and/or urea resins are prepolymers which contain 5 to 50% by mass, based on the thermosetting prepolymers, of coupled blocks of polyacrylates, unmodified and/or modified maleic anhydride copolymers, polyesters and/or alkyd resins.

5. Moulding materials comprising wood particles and thermosetting prepolymers according to one or more of Claims 1 to 4, **characterized in that** the water-soluble polymers are polyvinyl alcohol, polyacrylamide, polyvinylpyrrolidone, polyethylene oxide, methylcellulose, ethylcellulose, hydroxyethylcellulose and/or carboxymethylcellulose.

6. Moulding materials comprising wood particles and thermosetting prepolymers according to one or more of Claims 1 to 5, **characterized in that** the polymers dispersible in water or emulsifiable in water are thermoplastics, preferably cellulose esters, cellulose ethers, polyvinyl acetate, polvinyl propionate, polyacrylates, modified maleic anhydride copolymers, polypropylene oxide and/or ethylene/vinyl acetate copolymers, elastomers, preferably styrene/butadiene rubbers, acrylate rubbers, polyurethanes and/or fluorine elastomers and/or waxes, preferably polyolefin wax oxidates or waxes based on ethylene/vinyl acetate copolymers or partly hydrolysed ethylene/vinyl acetate copolymers.

7. Process for the preparation of moulding materials comprising wood particles and thermosetting prepolymers, **characterized in that** the moulding materials are prepared from
a) 65 to 95% by mass of modified wood particles,
b) 5 to 34.5% by mass of prepolymers of melamine resins and/or urea resins having number average molar masses of 200 to 5000,
c) 0.5 to 10% by mass of polymers which are water-soluble, dispersible in water and/or emulsifiable in water,
d) optionally 0.5 to 15% by mass of fillers and/or reinforcing substances and 0.1 to 1% by mass of processing auxiliaries,
by a multistage reactive compounding, wherein
- in the first process stage, wood particles are metered via a cellular wheel sluice into a continuous flow-through drier in which the wood particles are modified at 80 to 180°C and in a residence time of 2 to 35 min by spraying with a solution, dispersion or emulsion containing 0.5 to 10% by mass of polymers which are water-soluble, dispersible in water and/or emulsifiable in water and optionally prepolymers of melamine resins and/or urea resins, by impregnation and drying to a residual water content of 0.5 to 5% by mass under an inert gas atmosphere,
- in the second process stage, the wood particles modified in the first process stage are subjected, optionally with addition of 1 to 30% by mass, based on the modified wood particles, of alkenyl acetates of the formula R·C(=CH₂)-O-CO-CH₃, in which R denotes H or R denotes C₁-C₄-alkyl, and/or phosphorylating agents of the type consisting of C₁-C₄-dialkyl phosphites, phosphoric acid di-C₁-C₄-alkyl ester chlorides, di-C₁-C₄-alkyl phosphates and/or mono-C₁-C₄-alkyl phosphates, in a heatable continuous mixer having metering nozzles for ammonia gas, metering nozzles for prepolymers of melamine resins and/or urea resins and nozzles for vacuum devolatilization, at 15 to 140°C and after a residence time of 0.5 to 10 min, to a treatment with ammonia gas at a pressure of 0.3 to 1.5 MPa up to an ammonia absorption of 5 to 20% by mass, based on the modified wood particles, with removal of a mixture containing water and ammonia by devolatilization, the total residence time in the second process stage being 3 to 20 min,
- in the third process stage, the wood particles modified in the second process stage are metered via a cellular wheel sluice into a continuous kneader having metering means for thermosetting prepolymers, optionally with addition of fillers and reinforcing substances and processing auxiliaries, and are homogenized in a residence time of 3 to 12 min with the prepolymers of melamine resins and/or urea resins, the reaction mixture is reacted at temperatures in the range from 120 to 200°C, and the reaction product is devolatilized in vacuo, discharged and granulated,
prepolymers of melamine resins and/or urea resins being added in the first process stage after addition of the polymers which are water-soluble, dispersible in water and/or emulsifiable in water and/or in the second process stage before the devolatilization and/or in the third process stage.

8. Process for the preparation of moulding materials comprising wood particles and thermosetting prepolymers according to Claim 7, **characterized in that** the addition of prepolymers of melamine resins and/or urea resins is effected exclusively in the third process stage.

9. Process for the preparation of moulding materials comprising wood particles and thermosetting prepolymers according to Claims 7 and 8, **characterized in that** the metering of the thermosetting prepolymer is effected in the first process stage after addition of the polymers which are water-soluble, dispersible in water and/or emulsifiable in water and/or in the second process stage before the devolatilization and/or in the third process stage, preferably from a storage container, upstream of which a thermosetting prepolymer synthesis station is located.

10. Use of moulding materials according to one or more of Claims 1 to 6 for the production of injection moulded parts or of semifinished products produced by extrusion or mouldings, preferably in the form of sheets, profiles, hollow profiles and pipes for use in the construction industry and/or furniture industry.

## Revendications

1. Matières à mouler à base de particules de bois et de prépolymères thermodurcissables, **caractérisées en ce que** les matières à mouler ont été préparées à partir de
a) 65 à 95 % en masse de particules de bois modifiées,
b) 5 à 34,5 % en masse de prépolymères de résines mélamine et/ou de résines urée ayant des moyennes en nombre de masse moléculaire de 200 à 5 000,
c) 0,5 à 10 % en masse de polymères hydrosolubles, dispersables dans l'eau et/ou émulsifiables dans l'eau,
d) éventuellement 0,5 à 15 % en masse de charges et/ou de renforts et 0,1 à 1% en masse d'adjuvants de traitement,
par un mélange réactif en plusieurs étapes, dans lequel
- dans la première étape de processus des particules de bois ont été modifiées avec des polymères hydrosolubles, dispersables dans l'eau et/ou émulsifiables dans l'eau, et éventuellement des prépolymères de résines mélamine et/ou de résines urée, par imprégnation et séchage jusqu'à une teneur en eau résiduelle de 0,5 à 5 % en masse,
- dans la deuxième étape de processus les particules de bois modifiées dans la première étape de processus, éventuellement avec addition de 1 à 30 % en masse, par rapport aux particules de bois modifiées, d'acétates d'alcényle de formule R-C(=CH₂)-O-CO-CH₃, R représentant H ou un groupe alkyle en C₁-C₄, et/ou d'agents de phosphorylation du type phosphites de dialkyle en C₁-C₄, chlorures de phosphates de dialkyle en C₁-C₄, phosphates de dialkyle en C₁-C₄ et/ou phosphates de monoalkyle en C₁-C₄, ont été soumises dans un mélangeur continu à un traitement par du gaz ammoniac jusqu'à une absorption d'ammoniac de 5 à 20 % en masse, par rapport aux particules de bois modifiées, ensuite éventuellement à une imprégnation avec des prépolymères de résines mélamine et/ou de résines urée, avec séparation par dégazage d'un mélange contenant de l'eau et de l'ammoniac,
- dans la troisième étape de processus, les particules de bois modifiées dans la deuxième étape de processus, éventuellement avec addition de charges et de renforts ainsi que d'adjuvants de traitement, ont été homogénéisées dans un malaxeur continu avec les prépolymères de résines mélamine et/ou de résines urée, mises en réaction, dégazées sous vide,
et le produit de réaction a été déchargé et granulé, les prépolymères de résines mélamine et/ou de résines urée ayant été ajoutés dans la première étape de processus après addition des polymères hydrosolubles, dispersables dans l'eau et/ou émulsifiables dans l'eau et/ou dans la deuxième étape de processus avant le dégazage et/ou dans la troisième étape de processus.

2. Matières à mouler à base de particules de bois et de prépolymères thermodurcissables selon la revendication 1, **caractérisées en ce que** les particules de bois consistent en déchets de bois de résineux ou de feuillus, qui se trouvent sous forme de particules ayant un diamètre moyen de 0,2 à 8 mm, ou de petits morceaux ou de fibres d'une longueur maximale allant jusqu'à 12 mm.

3. Matières à mouler à base de particules de bois et de prépolymères thermodurcissables selon les revendication 1 et 2, **caractérisées en ce que** les prépolymères de résines mélamine et/ou de résines urée sont des prépolymères de résines mélamine-formaldéhyde, résines mélamine-phénol-formaldéhyde, résines urée-formaldéhyde et/ou résines mélamine-urée-formaldéhyde, dans lesquels éventuellement de 0,5 à 50% en moles des groupes méthylol dans le prépolymère ont été éthérifiés par réaction avec des alcools aliphatiques en C₁-C₄, des polyoxyalkylènes à masses moléculaires de 500 à 2 500 et/ou des (méth)acrylates d'hydroxyalkyle en C₅-C₁₂, estérifiés par réaction avec des acides insaturés du type acide acrylique, anhydride maléique et/ou des acides carboxyliques en C₁₂-C₁₈ et/ou modifiés par réaction avec des amides insaturés du type acrylamide ou méthacrylamide.

4. Matières à mouler à base de particules de bois et de prépolymères thermodurcissables selon les revendication 1 à 3, **caractérisées en ce que** les prépolymères de résines mélamine et/ou de résines urée sont des prépolymères qui contiennent de 5 à 50 % en masse, par rapport aux polymères thermodurcissables, de séquences couplées de polyacrylates, de copolymères d'anhydride maléique modifiés et/ou non modifiés, de polyesters et/ou de résines alkyde.

5. Matières à mouler à base de particules de bois et de prépolymères thermodurcissables selon une ou plusieurs des revendications 1 à 4, **caractérisées en ce que** les polymères hydrosolubles sont le poly(alcool vinylique), le polyacrylamide, la polyvinylpyrrolidone, le polyoxyéthylène, la méthylcellulose, l'éthylcellulose, l'hydroxyéthylcellulose et/ou la carboxyméthyl-cellulose.

6. Matières à mouler à base de particules de bois et de prépolymères thermodurcissables selon une ou plusieurs des revendications 1 à 5, **caractérisées en ce que** les polymères dispersables dans l'eau ou émulsifiables dans l'eau sont des matières thermoplastiques, de préférence des éthers de cellulose, des esters de cellulose, le poly(acétate de vinyle), le poly(propionate de vinyle), des polyacrylates, des copolymères d'anhydride maléique modifiés, le polyoxypropylène et/ou des copolymères éthylène/acétate de vinyle, des élastomères, de préférence des caoutchoucs styrène-butadiène, des caoutchoucs acrylate, des polyuréthannes et/ou des élastomères fluorés et/ou des cires, de préférence des cires de type produit d'oxydation de polyoléfine ou des cires à base de copolymères éthylène/acétate de vinyle ou de copolymères éthylène/acétate de vinyle partiellement saponifiés.

7. Procédé pour la préparation de matières à mouler à base de particules de bois et de prépolymères thermodurcissables, **caractérisé en ce que** les matières à mouler sont préparées à partir de
a) 65 à 95 % en masse de particules de bois modifiées,
b) 5 à 34,5% en masse de prépolymères de résines mélamine et/ou de résines urée ayant des moyennes en nombre de masse moléculaire de 200 à 5 000,
c) 0,5 à 10% en masse de polymères hydrosolubles, dispersables dans l'eau et/ou émulsifiables dans l'eau,
d) éventuellement 0,5 à 15 % en masse de charges et/ou de renforts et 0,1 à 1 % en masse d'adjuvants de traitement,
par un mélange réactif en plusieurs étapes, dans lequel
- dans la première étape de processus on introduit de façon réglée, par une écluse à roue cellulaire, des particules de bois dans un tunnel de séchage continu, dans lequel, à 80-180°C et pendant un temps de séjour de 2 à 35 minutes, les particules de bois sont modifiées par pulvérisation avec une solution, dispersion ou émulsion contenant de 0,5 à 10 % en masse de polymères hydrosolubles, dispersables dans l'eau et/ou émulsifiables dans l'eau, et éventuellement de prépolymères de résines mélamine et/ou résines urée, par imprégnation et séchage subséquent jusqu'à une teneur en eau résiduelle de 0,5 à 5 % en masse, sous une atmosphère constituée d'un gaz inerte,
- dans la deuxième étape de processus les particules de bois modifiées dans la première étape de processus sont soumises, par une écluse à roue cellulaire, éventuellement avec addition de 1 à 30 % en masse, par rapport aux particules de bois modifiées, d'acétates d'alcényle de formule R-C(=CH₂)-O-CO-CH₃, R représentant H ou un groupe alkyle en C₁-C₄, et/ou des agents de phosphorylation du type phosphites de dialkyle en C₁-C₄, chlorures de phosphates de dialkyle en C₁-C₄, phosphates de dialkyle en C₁-C₄ et/ou phosphates de monoalkyle en C₁-C₄, dans un mélangeur continu pouvant être chauffé, muni de conduits doseurs pour gaz ammoniac, de conduits doseurs pour prépolymères de résines mélamine et/ou résines urée et de conduits pour dégazage sous vide, à 15-140°C et après un temps de séjour de 0,5 à 10 minutes, à un traitement par du gaz ammoniac sous une pression de 0,3 à 1,5 MPa, jusqu'à une absorption d'ammoniac de 5 à 20 % en masse, par rapport aux particules de bois modifiées, avec séparation par dégazage d'un mélange contenant de l'eau et de l'ammoniac, le temps de séjour total dans la deuxième étape de processus étant de 3 à 20 minutes,
- dans la troisième étape de processus, les particules de bois modifiées dans la seconde étape de processus, éventuellement avec addition de charges et de renforts ainsi que d'adjuvants de processus, sont introduites de façon réglée, par une écluse à roue circulaire, dans un malaxeur continu muni d'un dispositif doseur pour prépolymères thermoplastiques et homogénéisées, pendant un temps de séjour de 3 à 12 minutes, avec les prépolymères de résines mélamine et/ou de résines urée, le mélange réactionnel est mis en réaction à des températures dans la plage de 120 à 200°C, et le produit de réaction est dégazé sous vide, déchargé et granulé, les prépolymères de résines mélamine et/ou de résines urée étant ajoutés dans la première étape de processus après addition des polymères hydrosolubles, dispersables dans l'eau et/ou émulsifiables dans l'eau et/ou dans la deuxième étape de processus avant le dégazage et/ou dans la troisième étape de processus.

8. Procédé pour la préparation de matières à mouler à base de particules de bois et de prépolymères thermodurcissables selon la revendication 7, **caractérisé en ce que** l'addition de prépolymères de résines mélamine et/ou de résines urée s'effectue exclusivement dans la troisième étape de processus.

9. Procédé pour la préparation de matières à mouler à base de particules de bois et de prépolymères thermodurcissables selon les revendications 7 et 8, **caractérisé en ce que** l'addition réglée du prépolymère thermoplastique s'effectue dans la première étape de processus après addition des polymères hydrosolubles, dispersables dans l'eau et/ou émulsifiables dans l'eau et/ou dans la deuxième étape de processus avant le dégazage et/ou dans la troisième étape de processus, de préférence à partir d'un réservoir qui est précédé d'un poste de synthèse de prépolymère thermoplastique.

10. Utilisation de matières à mouler selon une ou plusieurs des revendications 1 à 6, pour la production de pièces moulées par injection ou de produits semi-finis fabriqués par extrusion, de préférence sous formes de plaques, de profilés, de profilés creux et de tubes pour une utilisation dans l'industrie du bâtiment et/ou l'industrie du meuble.
